# EUROPEAN PATENT APPLICATION

(11) **EP 4 365 738 A1**
(43) Date of publication of application: **08.05.2024**
(21) Application number: 22306668.9
(22) Date of filing: 04.11.2022
(51) Int. Cl.: G06F 9/48

(54) **METHOD TO DIMENSION A BUFFER MEMORY**

(71) Applicant: Aptiv Technologies AG, 8200 Schaffhausen (CH)
(72) Inventor: GUILLEMOT, Patrice, 56000 Vannes (FR)
(74) Representative: Lewis Silkin LLP

(57) **Abstract**

A computer implemented method to dimension a buffer memory configured to be used by a plurality of executable tasks writing data elements in and/or reading data elements from the buffer memory according to a predetermined time scheduling, the method comprising the steps of:
• determining the writing and reading operations of the executable tasks
• determining the largest set of data elements to be stored in the buffer memory according to the writing and reading operations
• dimensioning the buffer memory according to the determined largest set of data elements.

## Description

### TECHNICAL FIELD

The present disclosure relates to the field of computer methods and systems. Such methods and systems can be used for example in a vehicle or for a vehicle.

### BACKGROUND

Real time computing relates to hardware and software systems subject to a real-time constraint, for example a time constraint from an event to a system response. Real-time programs must guarantee a response within specified time constraints, often referred to as deadlines.

Real time computing may be used in particular in safety-critical application, for example in the field of passenger transportation, power generation, heavy industries and the like. In the field of personal vehicles, many on-board functions may be managed by a computing system, in particular advanced functions such as autonomous driving and/or advanced driver assistance, but also simpler functions such as lightning management, engine management and the like.

Consequently, modern vehicles may include an on-board computing system with real-time capabilities, to ensure that the essential and safety functions are performed timely. For example, an on-board computing system may include executable tasks that are performed in a predetermined order and during a predetermined time. Each executable task may perform a part of one or several predetermined functions. In that case, the computing system is deterministic and may include a predetermined time scheduling providing the execution schedule of the executable tasks overtime.

Such an on-board computing system may include one or several buffer memories, for the executable tasks to read data element from or to write data elements in. An object of the present disclosure is to improve an on-board computing system by precisely dimensioning a buffer memory. In addition, an object of the present disclosure is to optimize a computer program and/or a time scheduling using a dimensioned buffer memory.

### SUMMARY

A first aspect of the present invention is a computer implemented method to dimension a buffer memory configured to be used by a plurality of executable tasks writing data elements in and/or reading data elements from the buffer memory according to a predetermined time scheduling, the method comprising the steps of:
- determining a plurality of writing and reading operations of the executable tasks
- determining a largest set of data elements to be stored in the buffer memory according to the determined writing and reading operations
- dimensioning the buffer memory according to the determined largest set of data elements.

Such a method allows to dimension the buffer memory to an optimal size, for example corresponding to the minimal buffer memory size required to execute properly the predetermined time scheduling. The dimension of the buffer memory may be a number of memory spaces available in the buffer memory and/or the memory size of the buffer memory. The largest set of data element may correspond to the maximum number or the maximum size of data elements to be stored concomitantly in the buffer memory.

Advantageously, the step of determining the largest set of data elements further includes the steps of:
- determining a lifetime of each data element involved in the writing and reading operations, the lifetime being the time range in the time scheduling between a writing operation of the data element and a reading operation of the data element,
- determining at least one set of data elements having overlapping lifetimes

In the case more than one sets of data elements have overlapping lifetimes, a largest set of data element may then be selected among them. In the case of several reading operation, only the last reading operation of a data element may be used to determine the lifetime of said data element. Preferably, the lifetime may be the time difference in the predetermined time scheduling between the start time of the time interval corresponding to the executable task writing said data element in the buffer memory and the end time of the time interval corresponding to the last executable task reading said data element from the buffer memory.

The above steps may allow to properly dimension a buffer memory even in the case of a complex time scheduling.

The overlapping lifetimes may be time ranges that spread in the predetermined time scheduling during at least a common time duration of the time scheduling, i.e. simultaneously during at least a portion of time scheduling.

Advantageously, the step of determining the largest set of data elements further includes the steps of:
- determining a set of data elements to be stored in the buffer memory at each of the writing and reading operations
- determining the largest set of data elements among the sets of data elements.

These steps may allow for a quick dimensioning of a time scheduling, for example using fewer computing resources.

Advantageously, in the step of determining a set of data elements to be stored in the buffer memory at each of the determined writing and reading operations, a data element to be stored in the buffer memory is a data element that is read by one of the executable tasks in said reading operation or in a later reading operation of the time scheduling and/or a data element that is written in said written operation or in an earlier writing operation of the time scheduling.

Advantageously, the step of determining the largest set of data elements includes determining the set of data elements including the highest number of data elements. This may allow to provide a dimension of the buffer memory including a number of memory spaces.

Advantageously, the present method includes a step of determining the memory size of each data element of the largest set of data elements and a step of computing the memory size of the largest set of data elements. This may allow to provide a dimension of the buffer memory including a memory size. For example, the memory size of the buffer memory may be slightly above the dimension obtained by the present steps to include a margin.

Advantageously, the step of determining the largest set of data elements includes determining the set of data elements having the largest memory size. This may be relevant in the case data elements having very different memory sizes are to be stored in the buffer memory.

Advantageously, the time scheduling includes predetermined time intervals to execute each instance, and at least one instance of each executable task and, in the step of determining the writing and reading operations, a writing operation is determined at a start time of a time interval of a corresponding executable task and/or a reading operation is determined at an end time of a time interval of a corresponding executable task. This may provide a more reliable dimensioning of the buffer memory.

Advantageously, the buffer memory has a plurality of memory spaces each having an index number, the method including the step of assigning at least one index number to each instance of each executable task to write a data element in the corresponding memory space and/or to read a data element from the corresponding memory space, based on the determined writing and reading operations. Consequently, a computer program executing the predetermined time scheduling with an optimized memory buffer can perform safely.

Advantageously, the predetermined time scheduling is iterative i.e. includes a sequence of executable tasks which is repeated overtime. An iterative predetermined time scheduling allows to perform functions during any time duration.

Advantageously, the step of assigning index numbers to the executable tasks may be performed at least during a duration within the time scheduling equal to the duration of one iteration of the time scheduling multiplied by the number of data elements in the largest set of data elements. This allows a reliable assignment of the index numbers even in the case of a complex time scheduling.

A second aspect of the disclosure concerns a non-transitory computer readable medium comprising program instructions for causing a computer system to perform the steps of one of the computer implemented methods according to the above aspect.

A third aspect of the disclosure includes a computer implemented method of controlling executable tasks configured to write data in and/or read data from a buffer memory during time intervals of a predetermined time scheduling, wherein the buffer memory has a dimension at least equal to the dimension defined by the computer implemented method according to the above aspect.

Advantageously, the buffer memory defines memory spaces provided with index numbers and the executable tasks are configured to write data in and/or read data from the memory spaces having the index number assigned by the computer implemented method of the first aspect.

A fourth aspect of the present disclosure relates to a non-transitory computer readable medium comprising program instructions for causing a computer system to perform the steps of the computer implemented method according to the third aspect.

A fifth aspect of the present disclosure includes a computer system, preferably on-board a vehicle, having a buffer memory and the non-transitory computer readable medium of the fourth aspect. The computer system may have at least one processor to execute the executable tasks and various inputs/outputs to exchange data with sensors, interfaces and/or other subsystems of the vehicle.

### BRIEF DESCRIPTION OF THE DRAWINGS

Other features, purposes and advantages of the disclosure will become more explicit by means of reading the detailed statement of the non-restrictive embodiments made with reference to the accompanying drawings.
Figure 1 shows a flow chart of a method according to the present disclosure.
Figure 2 shows a flow chart of a method according to the present disclosure.
Figure 3 shows a visual representation of a simplified example of a time scheduling, illustrating the method of Figure 2.
Figure 4 shows a table showing the lifetimes of the data elements of Figure 3 obtained from the method of Figure 2.
Figure 5 shows a flow chart of a method according to the present disclosure.
Figure 6 shows a visual representation of a simplified example of a time scheduling, illustrating the method of Figure 5.
Figure 7 shows a flow chart of a method according to the present disclosure.
Figure 8 shows a visual representation of a simplified example of a time scheduling, illustrating the method of Figure 7.
Figure 9 shows a visual representation of a simplified example of a time scheduling, illustrating the method of Figure 7.

### DETAILED DESCRIPTION

The present methods and systems may be used in all kind of industries but are more particularly illustrated in the field of passenger transportation such as personal vehicles. An on-board computer system may include a deterministic computer program configured to execute executable tasks in a predetermined manner. A time scheduling may provide time intervals for the executable tasks to be executed and each time interval may have a predetermined start point and a predetermined end point with regard to an origin point of time t0 or t1 of the time scheduling.

An executable task may be a piece of computer program including one or several executable entities performing various tasks such as acquiring data for example from vehicle sensors or from other vehicle subsystems, performing computing operations, writing at least one data element in a buffer memory and/or reading at least one data element from the buffer memory.

For example, the time scheduling may be iterative and a same sequence of time intervals of the same executable tasks, may be repeated overtime, i.e. over different iterations of the time scheduling. Each iteration may have the same time duration or hyperperiod and may contain at least one or multiple instances of each same executable task, i.e. one or multiple time intervals to execute each executable task. The time scheduling may be a binary file, may comprise any number of executable tasks and may be of any duration.

The methods according to the present disclosure relate to computer programs and are thus computer implemented methods. A purpose of the following methods is to optimize or minimize a buffer memory and to optimize a computer program (i.e. a predetermined time scheduling) using the buffer memory.

### Buffer Memory Dimension

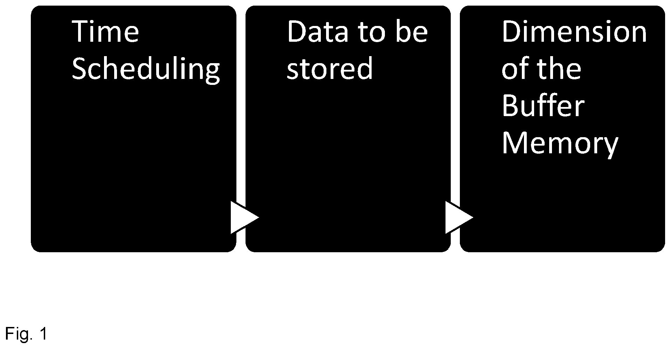

Fig. 1 shows a method to dimension a buffer memory according to its intended use. This method may be performed after the design of a deterministic computer program including a predetermined time scheduling. In particular, based on the predetermined time scheduling, a largest set of data elements to be stored in a buffer memory may be determined, for example during one iteration of the time scheduling.

Based on the largest set of data elements to be stored, a dimension of the buffer memory may be determined. Based on this method, an optimized dimension of the buffer memory may be obtained, thus optimizing the cost of a corresponding computer system in a later manufacturing step.

For example, the writing and reading operations of the time scheduling may be reviewed or analyzed. This may allow to determine a set of data elements to be stored, preferably at multiple time points of the time scheduling, for example each millisecond. Alternatively, a set of data elements to be stored may be determined at each time interval of the time scheduling such as each start time of a time interval and/or each end time of a time interval. Alternatively, a set of data elements to be stored may be determined at each start time of a writing executable task and each end time of a reading executable task. In the case multiple sets of data elements are determined, then the buffer memory may be dimensioned according to the largest data set, as detailed below.

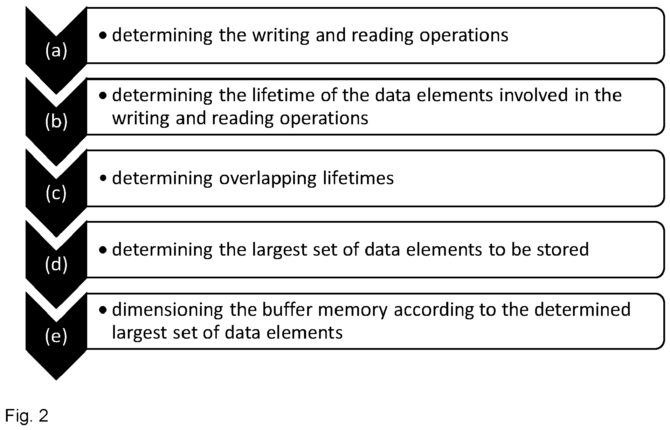

Fig. 2 shows a more detailed implementation of the method of Fig. 1.

In a step (a), the time scheduling is analyzed, and the writing operations and the reading operations of the executable tasks are determined. Preferably, a writing operation is determined in this step (a) to occur from the start time of the corresponding executable task, i.e. at the start of the corresponding time interval. Similarly, a reading operation may be determined in this step (a) to occur at an end time of the corresponding executable task. An executable task may perform at least one writing operation and/or at least one reading operation during a single time interval, i.e. in a single instance.

In a step (b), a lifetime of the data elements written and/or read in the writing and reading operations of step (a) is determined. A lifetime may be defined as a time range, in the predetermined time scheduling, in which the data elements must be stored in the buffer memory. For example, a lifetime may correspond to a time range in which a data element may be read by an executable task.

Preferably, a lifetime may be defined as the time range in the time scheduling between a writing operation of the data element and a reading operation of the data element, for example the last reading operation of the data element. A data element that is not involved in a reading operation may not be considered in this step (b).

In a step (c), the overlapping lifetimes of the data elements are determined. For example, at one or several time points of the predetermined time scheduling, several data elements must be stored in the buffer memory concomitantly in order to be read by an executable task at said time point or at a later time point of the time scheduling.

In a step (d), the largest set of data elements to be stored is determined. The largest set of data elements may be the set having the highest number of data elements or the set having the largest memory size.

In a step (e), the buffer memory may be dimensioned on the basis of the largest set of data elements determined in step (d). If the largest set of data elements has been determined to have the largest number of data elements, then the buffer memory may be designed to have a corresponding number of memory spaces. An additional step of determining the memory size of each of the data elements of said set of data elements may be performed. Alternatively, a maximum size of a data element may be determined.

Next, the minimum required size of the buffer memory may be computed based on the total memory size of the largest set of data elements. Alternatively, the largest set of data element may be the set of data elements having the highest memory size.

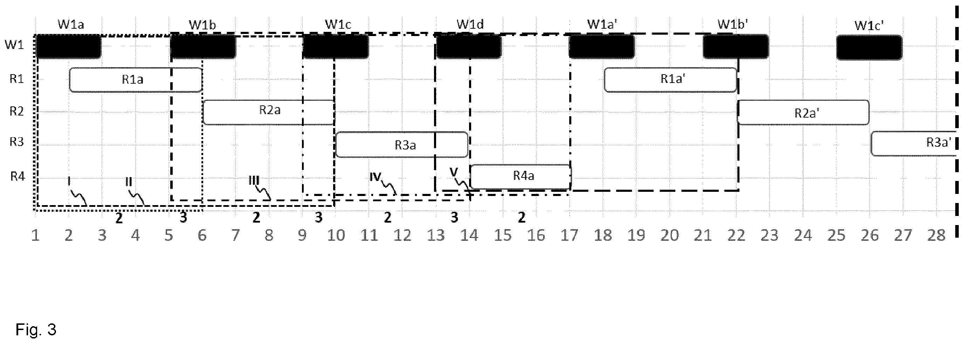

Fig. 3 shows a simplified visual representation of a time scheduling, including five executable tasks, one writing executable task W1 and four reading executable tasks R1, R2, R3, R4. The horizontal axis shows the time in arbitrary units, for example milliseconds, hundredths of seconds or seconds, from an origin time point t1 of the predetermined time scheduling. The vertical axis shows the different executable tasks.

These executable tasks are executed according to the predetermined time scheduling from t1 to t17, corresponding to an hyperperiod of 16 time units for one iteration of the time scheduling. At the end of the iteration, i.e. at time point t17, the executable tasks may be executed again in the same order and during the same durations for another iteration.

In this example, the writing executable task W1 is executed during multiple time intervals of the first iteration corresponding to multiple instances W1a, W1b, W1c, W1d. In the next iteration, the writing executable tasks are executed according to the same sequence in instances W1a', W1b' etc.

In the example of Fig. 3, each of the reading executable tasks has a single instance R1a, R2a, R3a, R4a. Other time scheduling may have one or multiple writing executable tasks with at least one instance per iteration and/or one or multiple instances of reading executable tasks.

According to step (a) of the method of Fig. 2, the writing and reading operations are determined. However, a writing or a reading operation may occur at any time of a time interval corresponding to an executable task. Consequently, in step (a), a writing operation may be assigned at a start time of a time interval of an executable task performing the writing operation. In addition, a reading operation may be assigned at the end time of a time interval of an executable task performing the reading operation.

In Fig. 3, writing operations may be determined at time point t1, t5, t9, t13, t17, t21 and t25. Reading operations may be determined at time points t6, t10, t14, t17, t22 and t26. Preferably, only the operations occurring in one iteration may be considered.

According to step (b) of Fig. 2, the lifetime of each data element may be determined based on these writing and reading operations, as being the time range between the writing operation and the reading operation of each data element, i.e. between a start time of a time interval of a writing executable task and an end time of a time interval of a reading executable task. In the case a data element is read several times, i.e. by several executable tasks, then the last reading operation may be considered.

Then, a default data element I may be written in the buffer memory, for example at time point t1 or before the start of the time scheduling, because the first instance of the writing executable task W1a may effectively write a data element at any time during the time interval t1-t3. Since the first instance of the reading executable task R1a may read the data element at any time during the time interval t2-t6 of R1a, then a default data element ensures that a data element is present in the buffer memory at the time of reading by R1a.

The default data element I may be read until the end of the time interval of R1a, i.e. time point t6. Consequently, the lifetime of this default data element I is t1-t6 and this lifetime corresponds to the time range in which the default data element must be stored in the buffer memory. At time point t6, the default data element I is no longer required in the buffer memory and may be deleted or replaced by another data element.

Then, a second data element II is written by the first instance of the writing executable task W1a. The writing operation may occur from the start time of the corresponding time interval, i.e. t1. This second data element II is read by the reading executable task R2a, up to the end time of the time interval of R2a. The lifetime of the second data element II is thus t1-t10. The second data element II must thus be stored in the buffer memory in the time range t1-t10.

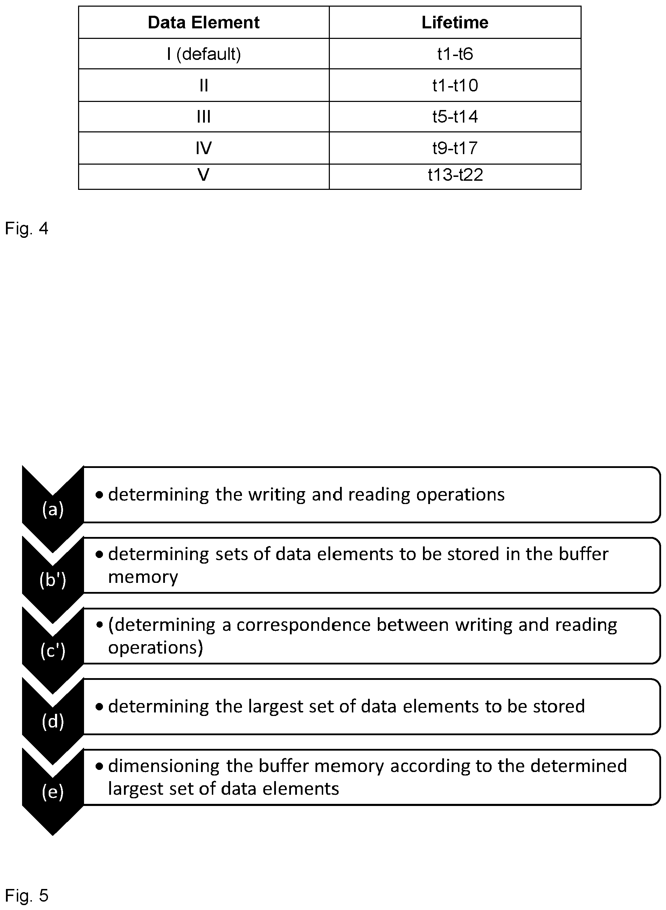

At t5, the second instance of the writing executable task, W1b, is started and W1b may thus write a third data element III from time point t5. The third data element III is read by the third reading executable task R3a, up to time point t14. The lifetime of the third data element III is thus t5-t14. Similarly, the third instance of the writing executable task W1c writes a fourth data element IV having a lifetime of t9-t17. The fourth instance of the writing executable task W1d writes a fifth data element V having a lifetime of t13-t22, which is thus read in the second iteration starting at time point t17. Fig. 4 shows the different data elements with the corresponding lifetimes.

According to step (c), overlaps of the lifetime of data elements are determined. The number below the horizontal axis in Fig. 3 indicates the number of data elements having overlapping life times. The lifetimes of the default data element and the first data element overlap in the time range t1-t6. The lifetimes of the default data element, the first data element and second data elements overlap in the time range t5-t6. The lifetimes of the first and second data elements overlap in the time range t6-t9, etc.

According to the step (d), the largest set of data elements having overlapping lifetimes is determined. According to Fig. 3, the largest data set includes three data elements in the time ranges t5-t6, t9-t10 and t13-t14.

According to a step (e), the buffer memory may be dimensioned according to the largest data set determined in step (d), i.e. must include at least 3 memory spaces and for example only 3 memory spaces.

Then, in an additional step, the memory size of each data element may be determined, and the memory size of the buffer memory may be determined accordingly. For example, each data element has the same memory size of 1 Ko and the memory size must be at least 3 Ko. Alternatively, a larger memory size may be allowed to provide for a margin, for example considering manufacturing tolerances and/or ageing of the memory chip.

The example of Fig. 3 may represent only one channel of the predetermined time scheduling including one writing executable tasks, several reading executable tasks and a buffer memory. The time scheduling may include a plurality of channels and the same steps may be repeated for each channel. Once the memory size or the number of memory spaces of the buffer memory is determined for each channel, the size of a memory chip to be inserted on a computer board may be determined.

Thanks to this method, the buffer memory may be dimensioned at a minimum required memory size, which thus limits the cost of the memory chip and of the computer board.

Fig. 5 shows another detailed implementation of the method of Fig. 1.

In a step (a), the time scheduling is read and the writing operations and the reading operations of the executable tasks are determined as described above. Again, a writing operation may be determined in this step (a) at the start time of the corresponding executable task. Similarly, a reading operation may be determined in this step (a) to occur up at an end time of the corresponding executable task. An executable task may perform at least one writing operation and/or at least one reading operation during a single time interval.

In a step (b'), the sets of data elements to be stored in the buffer memory as a result of the determined writing and reading operations are determined at multiple time points of the time scheduling, for example during one iteration of the time scheduling. Preferably, the sets of data elements to be stored are determined at time points corresponding to a start time and to an end time of each executable tasks, i.e. at each start and end of each time interval or in other words at each writing operation and each reading operation.

In an optional step (c'), a correspondence between each writing operation and each reading operation may be determined. This allows to determine that a certain reading operation corresponds to a certain writing operation, i.e. that these operations write and read the same data element in the buffer memory.

In a step (d), the largest set of data elements to be stored is determined as described above. The largest set of data elements may be preferably the set having the highest number of data elements or the set having the largest memory size, depending on the data elements to be stored.

In a step (e), the buffer memory may be dimensioned on the basis of the largest set of data elements determined in step (d), as described above. If the largest set of data elements has been determined to have the largest number of data elements, then an additional step of determining the memory size of each of the data elements of said set may be performed. Next, the minimum required size of the buffer memory may be computed.

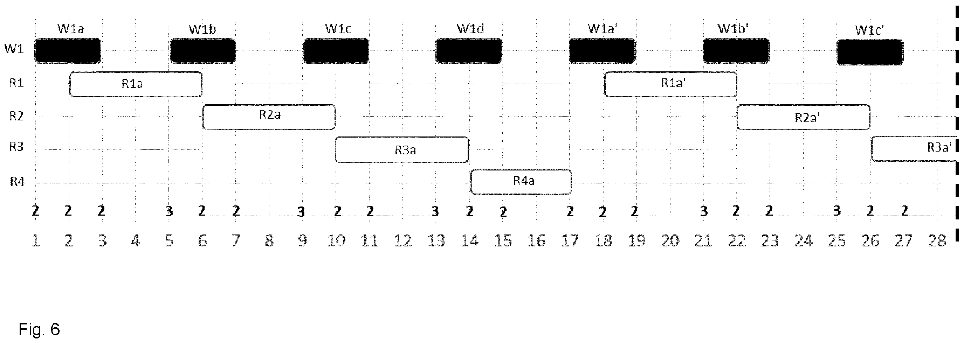

Fig. 6 illustrates the method of Fig. 5 with the same time scheduling as in Fig. 3. In this implementation, only the writing and reading operations of the executable tasks may be determined and not the lifetimes according to Figs. 2-4.

The horizontal axis shows the time in arbitrary units, for example milliseconds, hundredths of seconds or seconds. The vertical axis shows the different executable tasks. These executable tasks are executed according to the time scheduling from t1 to t17, corresponding to an hyperperiod of 16 time units for one iteration of the time scheduling, time point t17 corresponding to the start of the second iteration. In the second iteration, i.e. from time point t17, the same executable tasks may be executed again in the same order and during corresponding time intervals. The number of memory spaces required in the buffer memory at the different points of time is indicated above the vertical axis in bold numbers.

According to this implementation, at each writing operation, a memory space must be available to store the written data element. At each reading operation, a memory space may be freed since the data element has been read and is no longer required. In the case several executable tasks read the same data element, only the last reading operation may be considered. At the start of the time scheduling i.e. time point t1, a memory space may be required for a default data element.

At time point t1, the first instance of the writing executable task, W1a is started, and a data element may be written in the buffer memory. However, at time point t2, the first reading executable task R1a, is started and may need a data element that may not be available from W1a, in the case W1a writes the data element after time point t2. In that case, a default data element may be stored in the buffer memory to ensure that at least one data element is available in the buffer memory for reading by R1a. Consequently, two data elements must be stored at time point t1.

At time point t2, the first reading executable task R1a is started. Since it is unknown when the data element written by W1a will be effectively available in the buffer memory, then R1a reads the default data element stored in the buffer memory. It is also unknown when R1a performs the reading operation, so that the default data element must be stored in the buffer memory until the end of the time interval corresponding to R1a, i.e. until time point t6.

At time point t5, the default data element must be kept in the buffer memory, since the time interval of R1a is not over and it is possible that R1a performs a reading operation after time point t5. In addition, W1a has written another data element in another memory space of the buffer memory. Further, the second instance of the writing executable task, W1b, has started and a third memory space in the buffer memory is required to allow W1b to write a new data element. Consequently, a set of three data elements needs to be stored in the buffer memory at time point t5, thus requiring three memory spaces.

At time point t5, two writing operations have been performed, plus the memory space dedicated to the default data element. No reading operation has been performed and the number of data elements to be stored is thus three.

At time point t6, the time interval of R1a ends, and the reading operation of the default data element has been performed, so that the default data element is no longer required in the buffer memory. The time interval of the second reading executable task R2a starts but the time interval of the second instance of the writing executable task W1b is not yet over, and it is unknown if the data element has been written by W1b in the buffer memory. Consequently, R2a reads the data element written by W1a in the buffer memory since the time interval of W1a is over and the data element has been written in the buffer memory.

Three writing operations have been performed (including the default data element) and one reading operation has been performed. It results that only two memory spaces are needed at time point t6: one for the data element written by W1a and another one for the data element written by W1b.

At time point t9, the third instance of the writing executable task 1 is started, i.e. W1c and an additional writing operation is determined. Consequently, three memory spaces are required to store the data elements written by W1a, W1b and potentially by W1c. Indeed, the data element written by W1a is to be read by R2a, the data element written by W1b must be stored since it will be read by the third reader R3a and W1c may write a new data element at any moment from time point t9.

At time point t10, the time interval of R2a ends and a reading operation is determined. The data element written by W1a is no longer required in the buffer memory. Consequently, only two memory spaces are required, to store the data elements written by W1b and W1c that are read by the third and fourth executable task, respectively. The same operations of adding a memory space at a reading operation and subtracting a memory space at a reading operation may then be performed for the whole iteration.

Then, according to step (d) of Fig. 5, the largest set of data elements is determined and this largest set includes three data elements at time point t5, t9 and t13. The memory size may be dimensioned in a step (e) as disclosed above.

In the case the optional step (c') of Fig. 5 is performed, the writing operation at time point t1 in Fig. 6 is determined to correspond to the reading operation at time point t6, the writing operation at time point t5 corresponds to the reading operation at time point t10 etc. The correspondences may be computed based on the difference of an end time of a time interval of each writing executable task and a start time of a time interval of each reading executable task. A negative difference, i.e. a start time of a reading executable task occurring before the end time of a written executable task may be disregarded.

Consequently, only the smallest positive time difference between a reading operation and a writing operation may define a correspondence. This optional step (c') may allow to handle more complex predetermined time scheduling.

### Index Number

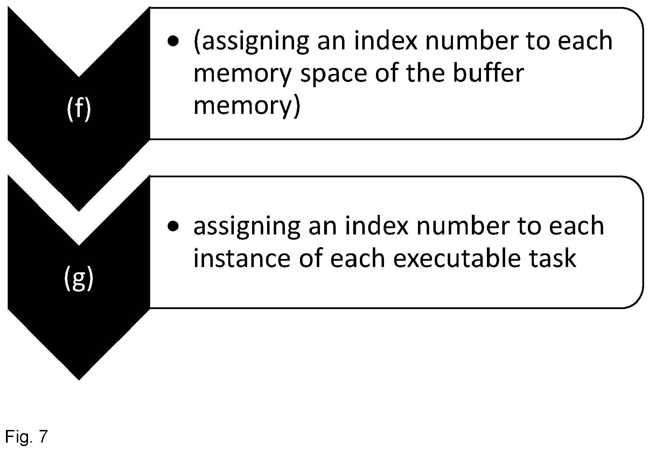

Fig. 7 shows another computer implemented method according to the present disclosure, with the purpose of optimizing a buffer memory dimensioned according to one of the methods disclosed with reference to Figs. 1-6.

The memory buffer may have a plurality of memory spaces each receiving an index number, a memory space being configured to store one data element. For example, in the case of three memory spaces as dimensioned according to the above methods, the memory spaces may have the respective index numbers 1, 2 and 3. Alternatively, a step (f) of assigning the index numbers 1, 2 and 3 to the respective memory space of the buffer memory may be performed.

Indeed, once the memory buffer has been dimensioned according to the above methods, it may not be possible to handle the memory spaces of the buffer memory as a ring buffer, in which each data element is stored in the next free memory space, since this method bears the risk of deleting a data element that is to be read at a later time point of the time scheduling.

A step (g) of assigning an index number to each instance of each executable task performing a reading operation and/or a writing operation may be performed. The number of index numbers must be equal to the minimum number of memory spaces in the buffer memory, as determined by one of the above methods.

For example, the computer implemented method may assign an index number to each writing executable task. Again, writing executable task that writes in the buffer memory a data element that is not read by a reading executable task may be ignored, i.e. may not receive an index number. Then, corresponding index numbers may be assigned to the reading executable tasks, for example based on a reading order, on the lifetime of the data element or on the correspondence.

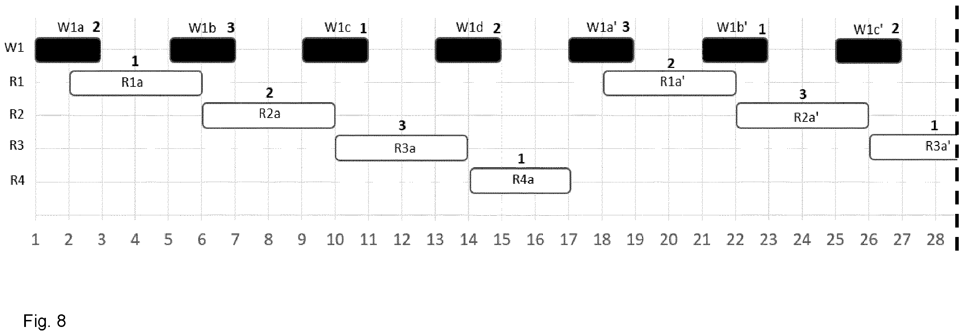

Fig. 8 shows a simplified visual representation of a time scheduling in which an index number has been assigned to each executable task based on the order of the writing and reading operations. The bold number above each executable task is the index number assigned to said executable task.

At time point t1, the default data element may be stored in the memory space having index number 1, i.e. the first memory space. Consequently, the second memory space with index number 2 is assigned to the first instance of the writing executable task W1a. The index number 1 is assigned to the first reading executable task R1a, in order for the executable task R1a to read the default data element stored in the first memory space. Index number 3 may be assigned to the second instance of the writing executable task W1b, in order for the executable task to have a free memory space to write the second data element.

Index number 1 may be assigned to the third instance of the writing executable task W1c, since the default data element in the corresponding memory space has been read by R1a. Similarly, index number 3 may be assigned to the reading executable task R3a, index number 2 may be assigned to the fourth instance of the writing executable task W1d, and index number 1 may be assigned to the fourth reading executable task R4a.

At the end of the iteration, i.e. at time point t17, the second iteration of the time scheduling starts and the first reading executable task R1a' may read the data element written by the fourth instance of the writing executable task W1d in the first iteration. Consequently, index number 3 may be assigned to the first reading executable task R1a' in the second iteration, whereas in the first iteration, index number 2 was assigned to the first instance of the reading executable task R1a.

This case occurs especially when a data element written in an iteration is read in the following iteration of the time scheduling. Consequently, it may be required to perform the step of assigning index numbers to executable tasks during more than one iteration. Preferably, the step of assigning index number may be performed over a number of iterations equal to the number of memory spaces. In the example of Fig. 8, the step of assigning the index number to the executable tasks may be preferably performed during three iterations, i.e. 49 time units.

For example, the index number may be assigned to the writing executable tasks following the normal order, with possibly the index number 1 being assigned to the writing operation of the default data element, if any. Consequently, index number 2 may be assigned to the first writing executable task W1a and index number 3 may be assigned to the second writing executable task W1b.

Then, index number 1 may be assigned to the third instance of the writing executable task W1c and index number 2 may be assigned to the fourth instance of the writing executable task W1d. Similarly for the reading executable tasks, index number 1 may be assigned to the first reading executable task, index number 2 may be assigned to the second reading executable task and so on.

In the second iteration, the assignment of the index number can be made by following the order of the first iteration, with index number 3 being assigned to the first instance of the writing executable task W1a'.

Alternatively, the lifetime of the data elements determined in the method of Fig. 2 may be used to assign index numbers to executable tasks. Accordingly, index numbers 1, 2 and 3 may be assign to the first, second and third data elements I, II, III, respectively, as described above. At time point t9, the third instance of the writing executable tasks W1c must write a data element in the buffer memory whereas all the memory spaces are occupied. However, data element I stored in the memory space having the index number I is expired, i.e. the time point t9 of the writing operation is later than the lifetime t1-t6 of the first data element. Consequently, index number 1 can be assigned to the third instance of the writing executable task W1c for W1C to write the fourth data element IV in the corresponding memory space.

More generally, two data elements having non-overlapping lifetimes may share the same index number. Index numbers may thus be attributed to the data elements in the order of their writing times, i.e. in the order of their writing operation in the buffer memory. Then, an available index number for each subsequent data element may be determined on the basis of an end time of a lifetime of a previous data element, i.e. based on a positive difference between the start time of a subsequent data element and an end time of a previous data element. For example in Fig. 4, data element IV is written i.e. has a start time, at t9, after the end time, i.e. the last reading operation, of the default data element which is t6. The default data element and the data element IV can thus share the same index number 1.

An index number may be assigned to each data element and the same index number may be assign to the corresponding writing executable task and reading executable task(s).

Such an implementation based on the lifetimes is particularly valuable when executable tasks have different durations and/or when one data element may be read by different executable tasks.

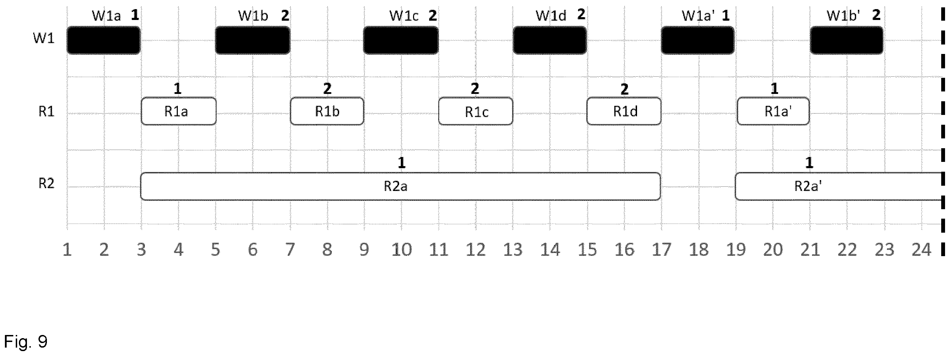

Fig. 9 shows a simplified representation of another time scheduling with a writing executable task executed four times, i.e. having four instance W1a, W1b, W1c, W1d in the first iteration of the time scheduling (t1 -t17). Two reading executable tasks R1 and R2 are also executed in the first iteration t1-t17.The first reading executable tasks R1 is executed in four instances R1a, R1b, R1c and R1d. The second reading executable task R2 is executed in a single instance R2a.

Applying the above methods, the buffer memory may be dimensioned to two memory spaces. Then, to determine the index numbers, index number 1 is assigned to the first data element written by W1a and read by R1a and R2a. the first data element has a lifetime t1-t17, since it may be read by R2a up to time point t17. Index number 2 is assigned to the second data element written by W1b. The second data element has a lifetime of t5-t9 since it is only read up to t9 by R1b. After time point t7, the second data element is expired, and the corresponding memory space may be re-assigned. Consequently, index number 2 may be assigned to W1c and R1c and then to W1d and R1d.

In the example of Fig. 9, no data element written in the first iteration is read in another iteration and the step of assigning index number to executable tasks may thus be performed only during a single iteration of the predetermined time scheduling.

All the above computer implemented methods may be implemented in a computer program, for example as program instructions of a non-transitory computer readable medium. Preferably, the above computer implemented methods are performed offline, i.e. outside a computer system executing the executable tasks in a vehicle.

The above methods may be performed on any computer system such as a personal computer, for example including a processor unit performing the steps of the above methods, one or several memory units, and the above non-transitory computer readable medium. The result of the above methods may be provided in a visual way on a display of the computer and/or exported as a binary file. For example, the predetermined time scheduling is stored as a binary file and is input in the computer system. The computer system may then perform the above methods to compute the dimension or the total dimension of the buffer memory and/or update the predetermined time scheduling with the index numbers.

### Executing the Executable Tasks

Based on the above methods, a computer implemented method or computer program may be designed to execute the executable tasks according to the time scheduling with the optimized buffer memory and the defined index numbers. This computer implemented method may be used online, i.e. onboard a vehicle during the normal use of the vehicle.

For example, each executable task may be executed at the predetermined time interval and may perform a writing or a reading operation in the memory space corresponding to the assigned index number.

The program instructions may be stored in a storage module related to the vehicle, such as volatile memory, e.g., ROM, RAM, etc., and/or non-volatile memory, e.g., Flash, NAND, etc., that is permanently or removably integrated in the vehicle or connectable to the vehicle, e.g., via the 'cloud', and can be executed by a computer, or a calculator of the vehicle, such as one or more modules of electronic control units (ECUs).

Such a method allows to optimize a computer program performing any function of a vehicle for a computer system having an optimized buffer memory, thus reducing the overall costs of the on-board computer system.

## Claims

1. A computer implemented method to dimension a buffer memory configured to be used by a plurality of executable tasks writing data elements in and/or reading data elements from the buffer memory according to a predetermined time scheduling, the method comprising the steps of:
• determining a plurality of writing and reading operations of the executable tasks
• determining a largest set of data elements to be stored in the buffer memory according to the determined writing and reading operations
• dimensioning the buffer memory according to the determined largest set of data elements.

2. The computer implemented method according to claim 1, wherein the step of determining the largest set of data elements further includes the steps of:
• determining a lifetime of each data element involved in the writing and reading operations, the lifetime being the time range in the time scheduling between a writing operation of the data element and a last reading operation of the data element,
• determining at least one set of data elements having overlapping lifetimes.

3. The computer implemented method according to claim 1, wherein the step of determining the largest set of data elements further includes the steps of:
• determining a set of data elements to be stored in the buffer memory at each of the writing and reading operations
• determining the largest set of data elements among the sets of data elements.

4. The computer implemented method according to claim 3, wherein in the step of determining a set of data elements to be stored in the buffer memory at each of the determined writing and reading operations, a data element to be stored in the buffer memory is a data element that is read by one of the executable tasks in said reading operation or in a later reading operation of the time scheduling and/or a data element that is written in said written operation or in an earlier writing operation of the time scheduling.

5. The computer implemented method according to any of claims 1 to 4, wherein the step of determining the largest set of data elements includes determining the set of data elements including the highest number of data elements.

6. The computer implemented method according to claim 5, including a step of determining the memory size of each data element of the largest set of data elements and a step of computing the memory size of the largest set of data elements.

7. The computer implemented method according to any of claims 1 to 4, wherein the step of determining the largest set of data elements includes determining the set of data elements having the largest memory size.

8. The computer implemented method according to any of claims 1 to 7, wherein the time scheduling includes predetermined time intervals to execute each instance of each executable task and, in the step of determining the writing and reading operations, a writing operation is determined at a start time of a time interval of a corresponding executable task and/or a reading operation is determined at an end time of a time interval of a corresponding executable task.

9. The computer implemented method according to any of claims 1 to 8, wherein the buffer memory has a plurality of memory spaces each having an index number, the method including the step of assigning at least one index number to each instance of each executable task to write a data element in the corresponding memory space and/or to read a data element from the corresponding memory space, based on the determined writing and reading operations.

10. The computer implemented method according to claim 9, wherein the predetermined time scheduling is iterative and wherein the step of assigning index numbers to the executable tasks is performed at least during a duration within the time scheduling equal to the duration of one iteration of the time scheduling multiplied by the number of data elements in the largest set of data elements.

11. A non-transitory computer readable medium comprising program instructions for causing a computer system to perform the steps of the computer implemented method according to any of claims 1 to 10.

12. A computer implemented method of controlling executable tasks configured to write data in and/or read data from a buffer memory during time intervals of a predetermined time scheduling, wherein the buffer memory has a dimension at least equal to the dimension defined by the computer implemented method according to any one of claims 1 to 10.

13. The computer implemented method according to claim 12, wherein the buffer memory defines memory spaces provided with index numbers and wherein the executable tasks are configured to write data in and/or read data from the memory spaces having the index number assigned by the computer implemented method of claim 8.

14. A non-transitory computer readable medium comprising program instructions for causing a computer system to perform the steps of the computer implemented method according to claim 12 or 13.

15. A vehicle including a computer system with a buffer memory and the non-transitory computer readable medium according to claim 14.
